(19) Europäisches Patentamt
European Patent Office
Office européen des brevets

(11) **EP 2 327 971 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(51) Int Cl.:
***G01K 17/10*** *(2006.01)*

(21) Anmeldenummer: **10008753.5**

(22) Anmeldetag: **23.08.2010**

(54) **Verfahren zur Analyse der Wärmemengenverteilung in einem Heizsystem und Vorrichtung zur Durchführung des Verfahrens**

Method for analysing the heat volume distribution in a heating system and device for executing the method

Procédé d'analyse de la répartition des quantités de chaleur dans un système de chauffage et dispositif d'exécution du procédé

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **25.11.2009 DE 102009055670**

(43) Veröffentlichungstag der Anmeldung:
**01.06.2011 Patentblatt 2011/22**

(73) Patentinhaber: **METRONA WÄRMEMESSER UNION GMBH**
**81379 München (DE)**

(72) Erfinder:
• **Schröder, Franz**
**D-82054 Sauerlach (DE)**
• **Navarro, Hendrikus Antonius**
**D-22145 Hamburg (DE)**

(74) Vertreter: **Prinz & Partner mbB**
**Patent- und Rechtsanwälte**
**Rundfunkplatz 2**
**80335 München (DE)**

(56) Entgegenhaltungen:
EP-A1- 0 150 671    EP-A1- 0 470 935
EP-A2- 1 770 469    EP-B1- 0 065 201
US-A- 5 026 171

**Beschreibung**

Die Erfindung betrifft ein Verfahren zur Analyse der Wärmemengenverteilung in einem Heizsystem mit Heizflächen, für die jeweils eine lokale Versorgungspumpe zur Versorgung der Heizfläche vorgesehen ist. Die Erfindung betrifft ferner eine Vorrichtung zur Durchführung dieses Verfahrens.

Es ist aufgrund zukunftsweisender Testergebnisse zu erwarten, dass in immer mehr Heizsystemen anstelle einer zentralen Umwälzpumpe kleine lokale Versorgungspumpen eingesetzt werden, die den Heizmediumzufluss dezentral für jede Heizfläche individuell regeln und somit die gängigen Thermostatventile ersetzen. In einem solchen Heizsystem mit lokalen Versorgungspumpen werden die Wärmeabgabe innerhalb des Heizungssystems und die Wärmeabgabe der Heizflächen hydraulisch optimiert, indem die Betriebsparameter der lokalen Versorgungspumpen über eine Vernetzung ständig zentral erfasst und gesteuert werden. Die auf diese Weise erreichte bedarfsorientierte individuelle dynamische Versorgung jeder einzelnen Heizfläche mit Heizmedium erlaubt im Vergleich zu Heizsystemen mit zentraler Umwälzpumpe und Drosselregelung eine durchgängige Reduktion der aktuell erforderlichen Vorlauftemperatur für einen bestimmten Energieübertrag (Wärmeabgabe). Diese Effizienzsteigerung beim Energieübertrag eröffnet ein nicht unerhebliches Energieeinsparpotenzial.

Aus der US 5 026 171 A ist ein Verfahren zur Analyse der Wärmemengenverteilung in einem Heizsystem mit Heizkörpern bekannt, die nicht mit Heizkostenverteilern ausgestattet sind. Der Vorlauf und der Rücklauf eines Heizkörpers sind jeweils mit einem Temperatursensor versehen, welche über ein Netzwerk mit einem Computer verbunden sind. Das Öffnen eines Durchflussventils oder das Starten einer lokalen Pumpe initiiert ein Heizintervall (heating episode), bei dem das zuvor auf Raumtemperatur abgekühlte Heizmedium im Heizkörper durch warmes Heizmedium verdrängt wird. Der markante Temperaturunterschied wird dazu genutzt, um mithilfe der Temperatursensoren am Vorlauf und Rücklauf die Durchgangszeit zu bestimmen, die der "markierte Teil" des Heizmediums durch den Heizkörper benötigt. Die Durchgangszeit ist umgekehrt proportional zur Strömungsgeschwindigkeit, sodass letztlich auf den Volumenstrom durch den Heizkörper geschlossen werden kann. Die Durchgangszeit wird für jedes Heizintervall neu bestimmt und gespeichert. Im Computer werden dann auf der Grundlage dieser Größe Energieübertragungsberechnungen durchgeführt.

Die EP 0 470 935 A1 beschreibt ein Verfahren zur Wärmemengen-Messung durch Summierung der Momentanwert-Produkte des Medium-Durchflusses und der Differenz zwischen Vorlauf- und Rücklauftemperatur. Für die Messung des Medium-Durchflusses wird periodisch eine vorübergehende Sperrung des Heizmedium-Durchflusses im Verbraucherkreislauf erzwungen. Jeweils bei gesperrtem Durchfluss wird der Leerlaufwert der Druckdifferenz der Umwälzpumpe, die Drehzahl des Pumpenmotors, der elektrische Wirk- oder Scheinwiderstand des Pumpenmotors und/oder die elektrische Wirk- oder Scheinleistung des Pumpenmotors gemessen. Bei umlaufendem Medium wird bzw. werden laufend die entsprechende{n} Größe(n) gemessen. Aufgrund des vorangehend gemessenen Leerlaufwertes und eines vorbestimmten Funktionszusammenhanges zwischen dieser Größe und des Durchflusses werden die Durchfluss-Momentanwerte bestimmt. Dieses Verfahren setzt einen "eigenen" Verbraucherkreislauf mit Vorlauf- und Rücklaufleitung und Umwälzpumpe sowie mindestens ein elektrisch steuerbares Absperrventil als Bestandteile der Heizungsanlage voraus und eignet sich deshalb nicht für die Bestimmung der relativen Wärmemengenabgaben einer Mehrzahl von Heizflächen, die zwar an derselben Umwälzpumpe hängen, sich aber in verschiedenen Abrechnungseinheiten befinden.

In der EP 0 150 671 B1 wird ein Verfahren zur Regelung einer thermischen Anlage mit mehreren Wärmetauschern unter gleichzeitiger Erfassung der umgesetzten Wärmemenge vorgestellt. Es ist eine Umwälzpumpe vorgesehen, deren Antriebsmotor in einem unterbrechbaren elektrischen Stromkreis liegt. Der Durchfluss durch die Wärmetauscher wird geregelt von einer temperaturabhängigen Führungsgröße und vom Istwert der Rücklauftemperatur nach dem Durchströmen der Wärmetauscher. In Abhängigkeit dieses Istwerts kann der Stromkreis der Umwälzpumpe unterbrochen oder geschlossen werden, um einen vorbestimmbaren Sollwert der Rücklauftemperatur aufrechtzuerhalten. Die Summe der Umdrehungen der Umwälzpumpe innerhalb eines wählbaren Zeitabschnittes und die Temperaturdifferenz zwischen der Vorlauf- und Rücklauftemperatur werden zur Bestimmung der im Wärmetauscher in diesem Zeitabschnitt umgesetzten Wärmemenge herangezogen. Für den Fall, dass mehrere getrennt voneinander arbeitende, aber an eine gemeinsame Ablaufleitung vom bzw. Zulaufleitung zum thermischen Regenerator angeschlossene Wärmetauscher geregelt werden sollen, wird vorgeschlagen, bei jedem Wärmetauscher oder jeder Wärmetauschergruppe die erfindungsgemässe Regeleinrichtung vorzusehen.

Aufgabe der Erfindung ist es, eine einfache und kostengünstige Möglichkeit zur Analyse der Wärmemengenverteilung in einem Heizsystem mit dezentral versorgten Heizflächen anzugeben.

Gelöst wird diese Aufgabe durch ein Verfahren mit den Merkmalen des Anspruchs 1. Vorteilhafte und zweckmäßige Ausgestaltungen des erfindungsgemäßen Verfahrens sind in den zugehörigen Unteransprüchen angegeben.

Das erfindungsgemäße Verfahren dient zur Analyse der Wärmemengenverteilung in einem Heizsystem mit Heizflächen, für die jeweils in einem Rücklauf der Heizfläche eine lokale Versorgungspumpe vorgesehen ist, die den Heizmediumzufluss dezentral für die jeweilige Heizfläche individuell regelt, wobei Betriebsparameter der lokalen Versorgungspumpen über eine Vernetzung ständig zentral erfasst und gesteuert werden, wobei das Verfahren folgende Schritte umfasst:

- Bestimmen von Rücklauftemperaturen der Heizflächen;

- Bestimmen von Vorlauftemperaturen der Heizflächen;

- Bestimmen von Volumenströmen des Heizmediums, das sich durch die Heizflächen bewegt, durch Auswertung eines Betriebsparameters der lokalen Versorgungspumpen; und

- Berechnen der von den Heizflächen abgegebenen Wärmemengen aus den bestimmten Rücklauftemperaturen, Vorlauftemperaturen und Volumenströmen.

Das Bestimmen eines Volumenstroms kann auch indirekt durch Bestimmen einer vom Volumenstrom abhängigen, auf den Durchfluss durch die Heizflächen bezogenen Größe erfolgen. Entsprechendes gilt für die Rücklauf- und Vorlauftemperaturen.

Die Erfindung beruht auf der Erkenntnis, dass es in einem Heizsystem mit dezentral versorgten Heizflächen durch kleine Modifikationen und geschicktes Einbeziehen und Auswerten von verfügbaren Informationen mit geringem gerätetechnischen Aufwand möglich ist, die Wärmemengenverteilung in einem solchen Heizsystem zu analysieren. Mit dem erfindungsgemäßen Verfahren lassen sich die relativen Anteile der Wärmemengenabgabe der einzelnen Heizflächen zeitlich aufschlüsseln. In Kombination mit Angaben zum Primärenergieverbrauch des gesamten Heizsystems - oder alternativ zu den Kostenaufwendungen für die Primärenergie - ist damit die Voraussetzung für eine Heizkostenverteilungsberechnung im Sinne der Heizkostenverordnung (HKVO) gegeben, ohne dass hierfür wie sonst üblich Heizkostenverteiler an den Heizflächen angebracht werden müssten. Das Verfahren geht in dieser Anwendung in der physikalischen Realisierung sogar über das Prinzip der Heizkostenverteilung mittels Heizkostenverteiler hinaus, stellt aber keine eichpflichtige Wärmemengenzählung dar, da es keine nominell exakte Messung einer Energiemenge beinhaltet.

Für eine alternative Wärmemengenabgabeberechnung nach dem nicht eichpflichtigen sogenannten "Dreifühlerprinzip" wird in einem zusätzlichen Schritt eine die Umgebung der jeweiligen Heizfläche charakterisierende Raumlufttemperatur gemessen. Die Raumlufttemperatur wird in diesem Fall als zusätzliche Eingangsgröße in die Berechnung der von den Heizflächen abgegebenen Wärmemengen einbezogen. Bislang wurde das an sich bekannte Dreifühlerprinzip wegen einer zentralen Unvollkommenheit praktisch nicht eingesetzt: Eine Dreifühleranordnung nach dem Stand der Technik kann temporär auftretende Erwärmungen der Vorlauftemperatursensoren, die durch direkte Wärmeleitung über das Heizungsrohrsystem verursacht werden, ohne dass gleichzeitig tatsächlich Heizmedium durch die Heizfläche strömt und Wärmeenergie abgibt, nicht erkennen und führt damit bei solchen Szenarien zur Zählung einer tatsächlich nicht erfolgten Wärmeabgabe. Die alternative Wärmemengenabgabeberechnung auf Basis der Erfindung überwindet aber diese Methodik-Schwäche: Mit einem zusätzlichen Abgleich zwischen der Dreifühlerkonstellation und dem erfindungsgemäß bestimmten Volumenstrom durch die jeweilige Heizfläche ist eine sichere Unterscheidung zwischen Heizflächenbetrieb und -nichtbetrieb jederzeit möglich. Bei verschwindendem Volumenstrom kann der Zählbetrieb unabhängig von der Konstellation der gemessenen Temperaturen eingestellt werden.

Die Rücklauftemperaturen können durch Temperaturmessungen mittels an den Rückläufen der Heizflächen vorgesehenen Temperatursensoren bestimmt werden. Die Temperatursensoren lassen sich ohne großen technischen Aufwand in die rücklaufseitig angeordneten lokalen Versorgungspumpen integrieren.

Die Vorlauftemperaturen werden am einfachsten durch Messung einer zentralen Vorlauftemperatur in der Nähe eines Wärmeerzeugers des Heizsystems bestimmt. Die zentrale Vorlauftemperatur ist eine wesentliche Größe für jede Heizungssteuerung und damit prinzipiell jederzeit verfügbar.

Um die Genauigkeit zu erhöhen, können die Vorlauftemperaturen durch zusätzliche Anwendung eines Korrekturfaktors oder einer mathematischen Funktion in Abhängigkeit der zentralen Vorlauftemperatur bestimmt werden. Der Korrekturfaktor bzw. die mathematische Funktion können rein empirisch ermittelt oder mithilfe eines Modells festgelegt werden.

Die Volumenströme lassen sich insbesondere durch Auswertung der Stromaufnahme der lokalen Versorgungspumpen oder deren zeitlichen Änderung, bestimmen. Es ist lediglich eine Schaltung bzw. Software zur Auswertung der Stromaufnahme erforderlich, also kein kostspieliger Durchflusssensor oder dergleichen.

Mit dem erfindungsgemäßen Verfahren können die von den Heizflächen abgegebenen Wärmemengen jeweils auf der Grundlage folgender Formel berechnet werden:

$$E_i = \int (TV_i(t) - TR_i(t)) * dV_i/dt * dt$$

wobei i: Nummernindex der jeweiligen Heizfläche; $E_i$: von der Heizfläche abgegebene Wärmemenge; $TV_i$: Vorlauftemperatur der Heizfläche; $TR_i$: Rücklauftemperatur der Heizfläche; $dV_i/dt$: Volumenfluss; t: Zeit.

Je nach verwendeter Technik wird die mathematische Integration in der Praxis als Summenbildung über geeignet kleine Zeitintervalle ausgeführt.

Die Rücklauftemperaturen werden vorzugsweise über die Verkabelung zur Energieversorgung der lokalen Versorgungspumpen an eine Zentraleinheit übertragen. Auf separate Verbindungen zwischen der Zentraleinheit und den lokalen Versorgungspumpen kann in diesem Fall verzichtet werden.

Unter Ausnutzung der ohnehin erforderlichen Steuerspannungen für die lokalen Versorgungspumpen können die Rücklauftemperaturen als auf die Steuerspannungen aufmodulierte Signale übertragen werden, insbesondere durch Frequenzmodulation.

Der Nutzer einer Wohneinheit kann sich über eine zur Zentraleinheit gehörige oder an diese gekoppelte Anzeige informieren, auf der die Wärmemengenverteilung betreffende Daten dargestellt werden.

Um gemäß einer Weiterbildung der Erfindung einem Wärmedienstleister eine Heizkostenverteilungsberechnung für das betreffende Heizsystem zu ermöglichen, werden die Wärmemengenverteilung betreffende, die für die Abrechnung relevante Daten von der Zentraleinheit an ein Rechenzentrum des Wärmedienstleisters übertragen.

In diesem Zuge kann als zusätzliche Dienstleistung des Wärmedienstleisters mithilfe der Zentraleinheit vom Nutzer ein zeitintervallgebundener oder aktueller Verbrauchs- und/oder Abrechnungsstatus abgerufen und angezeigt werden.

Der Verbrauchs- und/oder Abrechnungsstatus kann auch um eine Verbrauchs- bzw. Abrechnungsanalyse ergänzt werden, vorzugsweise in einem mehrjährigen Gesamtzusammenhang gemäß der aktuellen Heizkostenverordnung.

Gegenstand der Erfindung ist auch eine Vorrichtung zur Durchführung des Verfahrens mit den Merkmalen des Anspruchs 11. Vorteilhafte und zweckmäßige Ausgestaltungen der erfindungsgemäßen Vorrichtung sind in den zugehörigen Unteransprüchen angegeben.

Die erfindungsgemäße Vorrichtung umfasst ein Heizsystem mit Heizflächen, lokale Versorgungspumpen, die jeweils in einem Rücklauf einer zugeordneten Heizfläche angeordnet sind, Temperatursensoren zur Bestimmung der Rücklauftemperaturen, einen Temperatursensor zur Bestimmung der zentralen Vorlauftemperatur, der vorzugsweise in der Nähe eines Wärmeerzeugers des Heizsystems angeordnet ist, und eine Zentraleinheit zur Berechnung der Volumenströme aus einem Betriebsparameter der lokalen Versorgungspumpen sowie zur Berechnung der von den Heizflächen abgegebenen Wärmemengen aus den bestimmten bzw. berechneten Rücklauftemperaturen, Vorlauftemperaturen und Volumenströmen.

Da ein Temperatursensor zur Bestimmung der zentralen Vorlauftemperatur ohnehin in jedem gängigen Heizsystem vorgesehen ist, sind zur Durchführung des erfindungsgemäßen Verfahrens lediglich die Implementierung von Temperatursensoren zur Bestimmung der Rücklauftemperaturen sowie geeignete Schaltungen bzw. Software in der Zentraleinheit zur Berechnung der Volumenströme aus einem Betriebsparameter der lokalen Versorgungspumpen sowie zur letztlichen Berechnung der von den Heizflächen abgegebenen Wärmemengen erforderlich. Dieser Zusatzaufwand ist jedenfalls dann vertretbar, wenn das Verfahren als Grundlage für eine Heizkostenverteilungsberechnung verwendet wird, weil auf die Anbringung und Wartung von Heizkostenverteilern verzichtet werden kann.

Für eine alternative Wärmemengenabgaberechnung nach dem oben bereits erläuterten nicht eichpflichtigen "Dreifühlerprinzip" ist zusätzlich wenigstens ein Raumlufttemperatursensor zur Bestimmung einer die Umgebung der jeweiligen Heizfläche charakterisierenden Raumlufttemperatur vorgesehen, wobei die Raumlufttemperatur als zusätzliche Eingangsgröße in die Berechnung der von den Heizflächen abgegebenen Wärmemengen eingeht. Da bei einem auf lokalen Versorgungspumpen basierenden Heizsystem solche Raumlufttemperatursensoren für die Einzelraumregelung ohnehin in jedem Raum vorhanden sind, entsteht kein zusätzlicher Installationsaufwand, zumal die für die Einzelraumregelung erforderlichen Messwerte des Raumlufttemperatursensors standardmäßig der Zentraleinheit zugeführt werden.

Um die Rücklauftemperaturen von den Temperatursensoren der lokalen Versorgungspumpen über die Steuerleitungen an die Zentraleinheit übertragen zu können, bedarf es lediglich einer Einrichtung zum Aufmodulieren von Signalen auf die Steuerspannungen der lokalen Versorgungspumpen. Diese Technik ist an sich etabliert, sodass auf bewährte Komponenten/Methoden zurückgegriffen werden kann.

Die Zentraleinheit weist vorzugsweise eine Anzeige zur Darstellung von die Wärmemengenverteilung betreffenden Daten auf, über die sich der Nutzer einer Wohneinheit informieren kann.

Gemäß der Weiterbildung der Erfindung hinsichtlich einer Heizkostenverteilungsberechnung durch einen Wärmedienstleister umfasst die erfindungsgemäße Vorrichtung eine Einrichtung zur vorzugsweise bidirektionalen Übertragung von die Wärmemengenverteilung betreffenden Daten an bzw. von einem Rechenzentrum des Wärmedienstleisters.

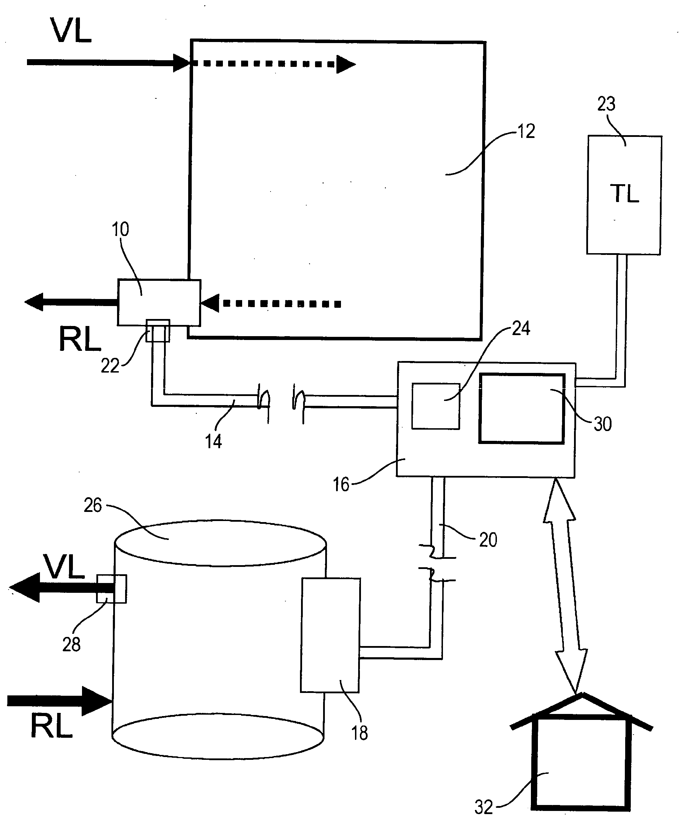

Weitere Merkmale und Vorteile der Erfindung ergeben sich aus der nachfolgenden Beschreibung sowie aus der beigefügten Zeichnung, auf die Bezug genommen wird. In der Zeichnung zeigt die einzige Figur schematisch ein Heizsystem mit einer erfindungsgemäßen Vorrichtung.

Bei Heizsystemen mit lokalen Versorgungspumpen ist im Rücklauf jeder Heizfläche eine im Vergleich zu einer zentralen Umwälzpumpe sehr klein dimensionierte Förderpumpe als lokale Versorgungspumpe 10 für die jeweilige Heizfläche 12 installiert. Auf diese Weise wird die Druckdifferenz über der Heizfläche minimiert, um die aufzuwendende Pumpleistung so gering wie möglich zu halten.

Nachfolgend werden ein Verfahren zur Analyse der Wärmemengenverteilung in einem solchen Heizsystem und die vorrichtungstechnischen Voraussetzungen für die Durchführung des Verfahrens anhand eines konkreten, nicht einschränkend zu verstehenden Ausführungsbeispiels erläutert, wobei die Ausführungen zur lokalen Versorgungspumpe 10 für jede der lokalen Versorgungspumpen im dezentral versorgenden Heizsystem gelten.

Die lokale Versorgungspumpe 10 ist über eine zweiadrige Steuerleitung 14 mit einer Mikroprozessor-Zentraleinheit 16 zur Übertragung einer Steuerspannung für die lokale Versorgungspumpe 10 verbunden. Die Mikroprozessor-Zentraleinheit 16 ist wiederum mit einer Heizungssteuerung 18 über eine zweiadrige Datenleitung 20 zur Übertragung von Daten verbunden. Die steuerungstechnische Vernetzung der Mikroprozessor-Zentraleinheit 16 mit der Heizungssteuerung 18 kann aber auch kabellos über eine Funkstrecke, z. B. im 868 - 870 MHz-Band, realisiert sein.

Die lokale Versorgungspumpe 10 ist mit einem ersten Temperatursensor 22, z. B. einem Heißleiter (NTC), zur Erfassung der Rücklauftemperatur TRi ausgerüstet. Somit ist die Rücklauftemperatur TRi der Heizfläche i ständig verfügbar. Die Rücklauftemperatur TRi wird in bestimmten Zeitabständen von der lokalen Versorgungspumpe 10 an die Mikroprozessor-Zentraleinheit 16 übertragen oder bei Bedarf von dieser abgefragt.

Die Übertragung der Temperaturwerte erfolgt bei der dargestellten bevorzugten Ausführungsform jeweils durch eine zusätzliche Aufschaltung eines frequenzmodulierten Signals auf die Steuerspannung der lokalen Versorgungspumpe 10, ohne dadurch den primären Charakter der Steuerleitung 14 einzuschränken. Die Energiespeisung des aufmodulierten Temperatursignals erfolgt ebenfalls über die Steuerspannung der lokalen Versorgungspumpe 10.

Ein weiterer Temperatursensor 23 misst eine die Umgebung der jeweiligen Heizfläche 12 charakterisierende Raumlufttemperatur TLi und wird nachfolgend als Raumlufttemperatursensor bezeichnet. Der Raumlufttemperatursensor 23 ist fester Bestandteil der Einzelraumregelung des auf den lokalen Versorgungspumpen 10 basierenden Heizsystems und deshalb mit der Mikroprozessor-Zentraleinheit 16 verbunden (üblicherweise im Rahmen eines Bussystems), damit die Messwerte als Eingangsgröße in die Einzelraumregelung einbezogen werden können. Der Raumlufttemperatursensor 23 kann aber auch ein vom Heizsystem unabhängiger Temperatursensor sein, dessen Messwerte der Mikroprozessor-Zentraleinheit 16 zugänglich sind. In jedem Fall misst der Raumlufttemperatursensor 23 eine Temperatur TLi, die für die (Wohnraum-)Umgebung einer oder mehrerer Heizflächen 12 in dem Raum repräsentativ ist. Hilfsweise kann die Temperatur TLi auch indirekt bestimmt werden, z.B. durch eine geeignete Berechnung aus einer oder mehreren anderen Größen.

In der Mikroprozessor-Zentraleinheit 16 ist eine Auswerteeinrichtung 24 mit einer geeigneten Schaltung für die Auswertung der Modulationssignale vorgesehen.

Des Weiteren werden der Mikroprozessor-Zentraleinheit 16 für jede lokale Versorgungspumpe 10 Informationen über den aktuellen Heizmedium-Volumenfluss durch die jeweilige Heizfläche 12 zugeführt. Diese ebenfalls ständig verfügbaren Informationen werden aus der Auswertung eines Betriebsparameters der lokalen Versorgungspumpe 10 gewonnen, der einen Rückschluss auf den relativen oder absoluten Heizmedium-Volumenstrom dVi/dt zulässt. Ein geeigneter Parameter hierfür ist insbesondere die aktuelle Stromaufnahme Ii(t) der lokalen Versorgungspumpe 10 bzw. deren zeitliche Änderung dIi/dt.

Die ständige Verfügbarkeit vorausgesetzt, sind die Rücklauftemperatur TRi und die Information über den aktuellen Heizmedium-Volumenfluss dVi/dt zusammen mit der Kenntnis der ungefähren Vorlauftemperatur TVi für eine Heizfläche ausreichend, um die Energieabgabe Ei dieser Heizfläche für einen bestimmten Zeitraum im Rahmen einer Analyse der Wärmemengenverteilung im Heizsystem aufintegrieren bzw. aufsummieren zu können.

Als Vorlauftemperaturen TVi für die Heizflächen werden entweder eine in der Nähe des Wärmeerzeugers 26 des Heizsystems von einem zweiten Temperatursensor 28 gemessene zentrale Vorlauftemperatur TVzentral oder auf diesem Wert basierende Schätzwerte (zum Beispiel durch Anwendung eines Korrekturfaktors) angenommen, die einen gewissen Wärmeverlust berücksichtigen, oder es werden Vorlauftemperaturwerte auf Basis eines Modells berechnet. Es hat sich in der Praxis gezeigt, dass die Vorlauftemperaturen TVi von Heizflächen maßgeblich von der zentralen Vorlauftemperatur TVzentral abhängen und in der Regel nur geringfügig von dieser Temperatur abweichen. Eine modellbasierte Darstellung der Vorlauftemperaturen TVi als Funktion der zentralen Vorlauftemperatur ist daher vornehmlich als Feinkorrektur zu verstehen.

Zur steuerungstechnischen Verwendung der zentralen Vorlauftemperatur TVzentral als Eingangsparameter (mit oder ohne Korrektur) wird die Temperatur z. B. an mindestens einem Messpunkt in der Nähe des Wärmeerzeugers 26 (Kessel) erfasst und über die Heizungssteuerung 18 an die Mikroprozessor-Zentraleinheit 16 übermittelt.

Das Analyseverfahren sieht vor, dass für jede der insgesamt n dezentral versorgten Heizflächen 12 im Heizsystem - abgeleitet aus den Pumpenströmen Ii(t) - kontinuierlich in festgelegten zeitlichen Abständen der Heizmedium-Volumenstrom dVi/dt und die Rücklauftemperatur TRi(t) aufgezeichnet werden. Ebenso werden die Vorlauftemperaturen TVi(t) aller Heizflächen 12, gegebenenfalls modelliert als TVi(t) = fi(TVzentral), aufgezeichnet.

Die Bestimmung der Wärmemengenverteilung erfolgt nach Festlegung geeignet langer zeitlicher Integrationsschritte durch kombinierte Integral- bzw. Summenbildung für die nominelle Gesamtwärmemenge Eges sowie die jeder Heizfläche 12 zuzuordnende Teilwärmemenge Ei über einen vorgegebenen Zeitraum. Dabei gilt:

$$Ei = \int (TVi(t) - TRi(t)) * dVi/dt * dt$$

$$Eges = \sum_{i=1}^{n} Ei$$

wobei i: Nummernindex der jeweiligen Heizfläche; n: Gesamtzahl der dezentral versorgten Heizflächen 12 im Heizsystem.

Mit diesen Beziehungen sind die relativen Anteile der Energieabgabe zwischen den einzelnen Heizflächen 12 eindeutig bestimmt und prinzipiell wohldefiniert als Voraussetzung für eine Heizkostenverteilungsberechnung.

Das Integral über die Zeit ist dabei in der Praxis zu ersetzen durch eine der Mikroprozessorverarbeitung angepasste Diskretisierung, d. h. Summenbildung über geeignet kleine Zeitintervalle.

Gemäß einer alternativen Methode zur Bestimmung der relativen Wärmemengenverteilung wird als weitere Eingangsgröße die Raumlufttemperatur TLi einbezogen, die in der Raumluft in der Umgebung der jeweiligen Heizfläche i vorherrscht. Die Bestimmung der Wärmemengenverteilung aus der Vorlauftemperatur TVi, der Rücklauftemperatur TRi sowie der Raumlufttemperatur TLi entspricht dem sogenannten "Dreifühlerprinzip", das als Sonderzulassung nicht unter die Eichpflicht fällt. Die an sich bekannte Bestimmung der Wärmemengenabgabe einer Heizfläche 12 auf Basis dreier Temperaturen ist im vorliegenden Fall nämlich im Wesentlichen deshalb hinreichend genau, weil die zu analysierenden Gradienten zwischen TV und TL, respektive TR und TL, wesentlich größer ausfallen als die zwischen TV und TR (wenige Grad Kelvin). Dadurch gestaltet sich der relative Messfehler der der Vorrichtung bzw. des Verfahrens wesentlich geringer als bei alleiniger Messung und Analyse des Gradienten zwischen TV und TR.

Der nach einer der beiden Methoden bestimmte aktuelle und/oder der zeitlich aufintegrierte bzw. aufsummierte Wärmemengenverteilungszustand wird innerhalb der Wohneinheit auf einer Anzeige 30 der Mikroprozessor-Zentraleinheit 16 dargestellt. Die Mikroprozessor-Zentraleinheit 16 ist zudem interaktiv ausgelegt und damit in der Lage, Eingaben des Nutzers bezüglich der Datendarstellung und/oder der Steuerung der Heizflächenversorgung zu verarbeiten.

Die in der Mikroprozessor-Zentraleinheit 16 berechneten Wärmemengen-Daten werden kabelgebunden oder drahtlos (mittels ISDN-, GSM-, GPRS- oder einer ähnlichen Technik) an ein Rechenzentrum 32 eines die Wohneinheit betreuenden Wärmedienstleisters übertragen. Dort wird auf der Grundlage der übertragenen Daten eine Heizkostenverteilung für die Wohneinheit berechnet. Eine Berechnung des aktuellen Verbrauchs- und/oder Abrechnungsstatus, erweiterbar um eine Verbrauchsanalyse oder Abrechnungsanalyse in einem mehrjährigen Gesamtzusammenhang gemäß der aktuellen Heizkostenverordnung, ist ebenfalls möglich.

Bezugszeichenliste

10 lokale Versorgungspumpe
12 Heizfläche
14 Steuerleitung
16 Zentraleinheit
18 Heizungssteuerung
20 Datenleitung
22 erster Temperatursensor
23 Raumlufttemperatursensor
24 Auswerteeinrichtung
26 Wärmeerzeugers
28 zweiter Temperatursensor
30 Anzeige
32 Rechenzentrum

**Patentansprüche**

1. Verfahren zur Analyse der Wärmemengenverteilung in einem Heizsystem mit Heizflächen (12), für die jeweils in einem Rücklauf der Heizfläche (12) eine lokale Versorgungspumpe (10) vorgesehen ist, die den Heizmediumzufluss dezentral für die jeweilige Heizfläche (12) individuell regelt, wobei Betriebsparameter der lokalen Versorgungspumpen (10) über eine Vernetzung ständig zentral erfasst und gesteuert werden, wobei das Verfahren folgende Schritte umfasst:

   - Bestimmen von Rücklauftemperaturen (TRi) der Heizflächen (12);
   - Bestimmen von Vorlauftemperaturen (TVi) der Heizflächen (12);
   - Bestimmen von Volumenströmen (dVi/dt) des Heizmediums, das sich durch die Heizflächen (12) bewegt, durch Auswertung eines Betriebsparameters der lokalen Versorgungspumpen (10); und
   - Berechnen der von den Heizflächen (12) abgegebenen Wärmemengen (Ei) aus den bestimmten Rücklauftemperaturen (TRi), Vorlauftemperaturen (TVi) und Volumenströmen (dVi/dt).

2. Verfahren nach Anspruch 1, **gekennzeichnet durch** folgenden zusätzlichen Schritt:

   - Bestimmen einer die Umgebung der jeweiligen Heizfläche (12) charakterisierenden Raumlufttemperatur (TLi),

wobei das Berechnen der von den Heizflächen (12) abgegebenen Wärmemengen (Ei) die Raumlufttemperatur (TLi) als zusätzliche Eingangsgröße einbezieht.

3. Verfahren nach Anspruch 1 oder 2, **dadurch gekennzeichnet, dass** die Rücklauftemperaturen (TRi) durch Temperaturmessungen mittels an den Rückläufen der Heizflächen (12) vorgesehenen ersten Temperatursensoren (22) bestimmt werden.

4. Verfahren nach einem der vorhergehenden Ansprüche, **dadurch gekennzeichnet, dass** die Vorlauftemperaturen (TVi) durch Messung einer zentralen Vorlauftemperatur (TVzentral) in der Nähe eines Wärmeerzeugers (26) des Heizsystems bestimmt werden.

5. Verfahren nach Anspruch 4, **dadurch gekennzeichnet, dass** die Vorlauftemperaturen (TVi) durch Anwendung eines Korrekturfaktors oder einer mathematischen Funktion in Abhängigkeit der zentralen Vorlauftemperatur (TVzentral) bestimmt werden.

6. Verfahren nach einem der vorhergehenden Ansprüche, **dadurch gekennzeichnet, dass** die Volumenströme (dVi/dt) durch Auswertung der Stromaufnahme (I(t)) der lokalen Versorgungspumpen (10) oder deren zeitlichen Änderung, bestimmt werden.

7. Verfahren nach einem der vorhergehenden Ansprüche, **dadurch gekennzeichnet, dass** die von den Heizflächen (12) abgegebenen Wärmemengen (Ei) jeweils auf der Grundlage folgender Formel berechnet werden:

$$Ei = \int (TVi(t) - TRi(t)) * dVi/dt * dt$$

8. Verfahren nach einem der vorhergehenden Ansprüche, **dadurch gekennzeichnet, dass** die Rücklauftemperaturen (TRi) über eine Verkabelung (14) zur Energieversorgung der lokalen Versorgungspumpen (10) an eine Zentraleinheit (16) übertragen werden, vorzugsweise als auf die Steuerspannungen der lokalen Versorgungspumpen (10) aufmodulierte Signale, insbesondere durch Frequenzmodulation.

9. Verfahren nach einem der vorhergehenden Ansprüche, **dadurch gekennzeichnet, dass** die Wärmemengenverteilung betreffende Daten auf einer zur Zentraleinheit (16) gehörigen oder an diese gekoppelte Anzeige (30) dargestellt werden und/oder von der Zentraleinheit (16) an ein Rechenzentrum (32) eines Wärmedienstleisters übertragen werden.

10. Verfahren nach einem der vorhergehenden Ansprüche, **dadurch gekennzeichnet, dass** mithilfe der Zentraleinheit (16) ein zeitintervallgebundener oder aktueller Verbrauchs- und/oder Abrechnungsstatus und bevorzugt zusätzlich auch eine Verbrauchs- bzw. Abrechnungsanalyse, vorzugsweise in einem mehrjährigen Gesamtzusammenhang gemäß der aktuellen Heizkostenverordnung, abgerufen und angezeigt werden kann.

11. Vorrichtung zur Durchführung des Verfahrens nach einem der vorhergehenden Ansprüche, mit einem Heizsystem mit Heizflächen (12), lokalen Versorgungspumpen (10), die jeweils in einem Rücklauf einer zugeordneten Heizfläche (12) angeordnet und jeweils mit einem ersten Temperatursensor (22) zur Bestimmung der Rücklauftemperatur (TRi) ausgerüstet sind, einem zweiten Temperatursensor (28) zur Bestimmung der zentralen Vorlauftemperatur (TVzentral), und einer Zentraleinheit (16) zur Berechnung der Volumenströme (dVi/dt) aus einem Betriebsparameter der lokalen Versorgungspumpen (10) sowie zur Berechnung der von den Heizflächen (12) abgegebenen Wärmemengen (Ei) aus den bestimmten bzw. berechneten Rücklauftemperaturen (TRi), Vorlauftemperaturen (TVi) und Volumenströmen (dVi/dt).

12. Vorrichtung nach Anspruch 11, **gekennzeichnet durch** wenigstens einen Raumlufttemperatursensor (23) zur Bestimmung einer die Umgebung der jeweiligen Heizfläche (12) charakterisierenden Raumlufttemperatur (TLi), wobei die Raumlufttemperatur (TLi) als zusätzliche Eingangsgröße in die Berechnung der von den Heizflächen (12) abgegebenen Wärmemengen (Ei) eingeht.

13. Vorrichtung nach Anspruch 11 oder 12, **gekennzeichnet durch** eine Einrichtung zur Berechnung der Volumenströme (dVi/dt) durch Auswertung eines Betriebsparameters der lokalen Versorgungspumpen (10), insbesondere der Stromaufnahme (I(t)) der lokalen Versorgungspumpen (10) oder deren zeitlichen Änderung.

14. Vorrichtung nach einem der Ansprüche 11 bis 13, **gekennzeichnet durch** eine Einrichtung zum Aufmodulieren von Signalen auf die Steuerspannungen der lokalen Versorgungspumpen (10).

15. Vorrichtung nach einem der Ansprüche 11 bis 14, **dadurch gekennzeichnet, dass** die Zentraleinheit (16) eine Anzeige (30) zur Darstellung von die Wärmemengenverteilung betreffende Daten aufweist.

16. Vorrichtung nach einem der Ansprüche 11 bis 15, **gekennzeichnet durch** eine Einrichtung zur vorzugsweise bidirektionalen Übertragung von die Wärmemengenverteilung betreffende Daten an bzw.

von einem Rechenzentrum (32) eines Wärmedienstleisters.

## Claims

1. A method of analyzing the heat quantity distribution in a heating system having heating surfaces (12), for each of which a local supply pump (10) is provided in a return of the heating surface (12), the local supply pump individually regulating the heating medium inflow for the respective heating surface (12) in a decentralized manner, wherein operating parameters of the local supply pumps (10) are constantly centrally collected and controlled via a network system, the method comprising the following steps:

   - determining return temperatures (TRi) of the heating surfaces (12);
   - determining supply temperatures (TVi) of the heating surfaces (12);
   - determining volume flows (dVi/dt) of the heating medium moving through the heating surfaces (12) by evaluating an operating parameter of the local supply pumps (10); and
   - calculating the heat quantities (Ei) emitted by the heating surfaces (12) from the determined return temperatures (TRi), supply temperatures (TVi) and volume flows (dVi/dt).

2. The method according to claim 1, **characterized by** the following additional step:

   - determining a room air temperature (TLi) characteristic of the environment of the respective heating surface (12),

   the calculating of the heat quantities (Ei) emitted by the heating surfaces (12) incorporating the room air temperature (TLi) as an additional input quantity.

3. The method according to claim 1 or 2, **characterized in that** the return temperatures (TRi) are determined by temperature measurements by means of first temperature sensors (22) provided at the returns of the heating surfaces (12).

4. The method according to any of the preceding claims, **characterized in that** the supply temperatures (TVi) are determined by measuring a central supply temperature (TVcentral) in the vicinity of a heat generator (26) of the heating system.

5. The method according to claim 4, **characterized in that** the supply temperatures (TVi) are determined by applying a correction factor or a mathematical function in dependence on the central supply temperature (TVcentral).

6. The method according to any of the preceding claims, **characterized in that** the volume flows (dVi/dt) are determined by evaluating the current consumption (I(t)) of the local supply pumps (10) or its change over time.

7. The method according to any of the preceding claims, **characterized in that** the heat quantities (Ei) emitted by the heating surfaces (12) are each calculated on the basis of the following formula:

$$Ei = \int (TVi(t) - TRi(t)) * dVi/dt * dt$$

8. The method according to any of the preceding claims, **characterized in that** the return temperatures (TRi) are transmitted to a central unit (16) via a cabling (14) for the power supply of the local supply pumps (10), preferably in the form of signals modulated onto the control voltages of the local supply pumps (10), in particular by frequency modulation.

9. The method according to any of the preceding claims, **characterized in that** data relating to the heat quantity distribution are displayed on a display (30) associated with or coupled to the central unit (16) and/or are transmitted by the central unit (16) to a computing center (32) of a heating service provider.

10. The method according to any of the preceding claims, **characterized in that** a time interval-dependent or current consumption status and/or billing status and preferably additionally a consumption analysis and/or billing analysis, preferably in a multi-year overall context in accordance with the current degree on heat cost allocation, can be retrieved and displayed with the aid of the central unit (16).

11. A device for carrying out the method according to any of the preceding claims, comprising
a heating system having heating surfaces (12);
local supply pumps (10) which are each arranged in a return of an associated heating surface (12) and are each equipped with a first temperature sensor (22) for determining the return temperature (TRi);
a second temperature sensor (28) for determining the central supply temperature (TVcentral); and
a central unit (16) for calculating the volume flows (dVi/dt) from an operating parameter of the local supply pumps (10) and for calculating the heat quantities (Ei) emitted by the heating surfaces (12) from the determined and, respectively, calculated return temperatures (TRi), supply temperatures (TVi) and volume flows (dVi/dt).

12. The device according to claim 11, **characterized by** at least one room air temperature sensor (23) for determining a room air temperature (TLi) characteristic of the environment of the respective heating surface (12), the room air temperature (TLi) being included as an additional input quantity in the calculation of the heat quantities (Ei) emitted by the heating surfaces (12).

13. The device according to claim 11 or 12, **characterized by** a means for calculating the volume flows (dVi/dt) by evaluating an operating parameter of the local supply pumps (10), in particular the current consumption (I(t)) of the local supply pumps (10) or its change over time.

14. The device according to any of claims 11 to 13, **characterized by** a means for modulating signals onto the control voltages of the local supply pumps (10).

15. The device according to any of claims 11 to 14, **characterized in that** the central unit (16) includes a display (32) for displaying data relating to the heat quantity distribution.

16. The device according to any of claims 11 to 15, **characterized by** a means for a preferably bidirectional transmission of data relating to the heat quantity distribution to or from a computing center (32) of a heating service provider.

**Revendications**

1. Procédé pour l'analyse de la répartition des quantités de chaleur dans un système de chauffage présentant des surfaces de chauffage (12) pour lesquelles il est respectivement prévu dans un retour de la surface de chauffage (12) une pompe d'alimentation locale (10) qui régule l'arrivée d'agent de chauffage de manière décentralisée et individuellement pour la surface de chauffage (12) respective, des paramètres de fonctionnement des pompes d'alimentation locales (10) étant continuellement saisis et commandés de manière centralisée par l'intermédiaire d'un réseau, le procédé comprenant les étapes suivantes :

- détermination de températures de retour (TRi) des surfaces de chauffage (12) ;
- détermination de températures aller (TVi) des surfaces de chauffage (12) ;
- détermination de débits volumétriques (dVi/dt) de l'agent de chauffage se déplaçant à travers les surfaces de chauffage (12) par l'évaluation d'un paramètre de fonctionnement des pompes d'alimentation locales (10) ; et
- calcul des quantités de chaleur (Ei) dégagées par les surfaces de chauffage (12) à partir des températures de retour (TRi), des températures aller (TVi) et des débits volumétriques (dVi/dt) tels que déterminés.

2. Procédé selon la revendication 1, **caractérisé par** l'étape additionnelle suivante :

- détermination d'une température d'air ambiant (TLi) caractérisant l'environnement de la surface de chauffage (12) respective,

le calcul des quantités de chaleur (Ei) dégagées par les surfaces de chauffage (12) tenant compte de la température d'air ambiant (TLi) en tant que grandeur d'entrée additionnelle.

3. Procédé selon la revendication 1 ou 2, **caractérisé en ce que** les températures de retour (TRi) sont déterminées par des mesures de température au moyen de premiers capteurs de température (22) prévus sur les retours des surfaces de chauffage (12).

4. Procédé selon l'une des revendications précédentes, **caractérisé en ce que** les températures aller (TVi) sont déterminées par la mesure d'une température aller centrale (TVzentral) à proximité d'un générateur de chaleur (26) du système de chauffage.

5. Procédé selon la revendication 4, **caractérisé en ce que** les températures aller (TVi) sont déterminées par l'application d'un facteur de correction ou d'une fonction mathématique en fonction de la température aller centrale (TVzentral).

6. Procédé selon l'une des revendications précédentes, **caractérisé en ce que** les débits volumétriques (dVi/dt) sont déterminés par l'évaluation de la consommation de courant (I(t)) des pompes d'alimentation locales (10) ou de sa variation dans le temps.

7. Procédé selon l'une des revendications précédentes, **caractérisé en ce que** les quantités de chaleur (Ei) dégagées par les surfaces de chauffage (12) sont chacune calculées sur la base de la formule suivante :

$$Ei = \int (TVi(t) - TRi(t)) * dVi/dt * dt$$

8. Procédé selon l'une des revendications précédentes, **caractérisé en ce que** les températures de retour (TRi) sont transmises à une unité centrale (16) par l'intermédiaire d'un câblage (14) pour l'alimentation en énergie des pompes d'alimentation locales (10), de préférence sous forme die signaux modulés sur les tensions de commande des pompes d'alimentation locales (10), en particulier par modulation en fréquence.

9. Procédé selon l'une des revendications précédentes, **caractérisé en ce que** des données concernant la répartition des quantités de chaleur sont représentées sur un écran (30) qui appartient ou qui est couplé à l'unité centrale (16) et/ou sont transmises par l'unité centrale (16) à un centre de calcul (32) d'un prestataire de services thermiques.

10. Procédé selon l'une des revendications précédentes, **caractérisé en ce qu'**au moyen de l'unité centrale (16), il est possible d'extraire et d'afficher un état de consommation et/ou de facturation lié à des intervalles de temps ou actuel et de préférence en outre aussi une analyse de consommation ou de facturation, de préférence dans un contexte globale de plusieurs années selon le règlement actuel concernant les frais de chauffage.

11. Dispositif pour la réalisation du procédé selon l'une des revendications précédentes, comportant un système de chauffage présentant des surfaces de chauffage (12), des pompes d'alimentation locales (10) qui sont chacune agencées dans un retour d'une surface de chauffage (12) associée et qui sont chacune équipées d'un premier capteur de température (22) pour la détermination de la température de retour (TRi), un deuxième capteur de température (28) pour la détermination de la température aller centrale (TVzentral), et une unité centrale (16) pour le calcul des débits volumétriques (dVi/dt) à partir d'un paramètre de fonctionnement des pompes d'alimentation locales (10) et pour le calcul des quantités de chaleur (Ei) dégagées par les surfaces de chauffage (12) à partir des températures de retour (TRi), des températures aller (TVi) et des débits volumétriques (dVi/dt) tels que déterminés.

12. Dispositif selon la revendication 11, **caractérisé par** au moins un capteur de température d'air ambiant (23) pour la détermination d'une température d'air ambiant (TLi) caractérisant l'environnement de la surface de chauffage (12) respective, la température d'air ambiant (TLi) étant prise en compte en tant que grandeur d'entrée additionnelle dans le calcul des quantités de chaleur (Ei) dégagées par les surfaces de chauffage (12).

13. Dispositif selon la revendication 11 ou 12, **caractérisé par** un moyen de calcul des débits volumétriques (dVi/dt) par l'évaluation d'un paramètre de fonctionnement des pompes d'alimentation locales (10), en particulier de la consommation de courant (I(t)) des pompes d'alimentation locales (10) ou de sa variation dans le temps.

14. Dispositif selon l'une des revendications 11 à 13, **caractérisé par** un moyen de modulation de signaux sur les tensions de commande des pompes d'alimentation locales (10).

15. Dispositif selon l'une des revendications 11 à 14, **caractérisé en ce que** l'unité centrale (16) présente un écran (30) pour la représentation de données concernant la répartition des quantités de chaleur.

16. Dispositif selon l'une des revendications 11 à 15, **caractérisé par** un moyen de transmission de préférence bidirectionnelle de données concernant la répartition des quantités de chaleur à ou depuis un centre de calcul (32) d'un prestataire de services thermiques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5026171 A
- EP 0470935 A1
- EP 0150671 B1